# EUROPÄISCHE PATENTANMELDUNG

(11) **EP 4 335 814 A2**
(43) Veröffentlichungstag der Anmeldung: **13.03.2024**
(21) Anmeldenummer: 23202541.1
(22) Anmeldetag: 15.05.2020
(51) Int. Cl.: B68B 5/00

(54) **GRUNDKÖRPER, DER SICH IN EINE LÄNGSRICHTUNG ERSTRECKT, NÄMLICH GÜRTEL, ARMBAND ODER HALSBAND, MIT EINEM DEKORATIONSBAND**

(30) Priorität: 17.05.2019 DE 202019102820 U
(62) Teilanmeldung aus: 20740189.4
(71) Anmelder: Magic Tack Holding UG (Haftungsbeschränkt), 67551 Worms (DE)
(72) Erfinder: REICHERT, David, 67551 Worms (DE)
(74) Vertreter: Beyer, Carsten

(57) **Zusammenfassung**

Vorgeschlagen wird ein Grundkörper (50), der sich in eine Längsrichtung erstreckt, nämlich Gürtel, Armband oder Halsband, mit einem auf der Oberseite und in Längsrichtung des Grundkörpers (50) angebrachten Dekorationsband (40), mit einem bandförmigen Element (10), wobei an beiden Enden (12, 112) des bandförmigen Elements (10) jeweils ein magnetisches Element (14, 114) zur lösbaren Verbindung des jeweiligen Endes (12, 112) an einem zweiten magnetischen Element (32) angeordnet ist, und mit zwei Gegenstücken (22, 122, 222, 322), welche jeweils ein zweites magnetisches Element (32) aufweisen, wobei jeweils ein Ende (12, 112) des bandförmigen Elements (10) lösbar an oder in einem Gegenstück (22, 122, 222, 322), nämlich an dem zweiten magnetischen Element (32) des Gegenstücks (22, 122, 222, 322), festlegbar bzw. festgelegt ist.

## Beschreibung

Die vorliegende Erfindung betrifft zunächst ein bandförmiges Element nach dem Oberbegriff des Anspruchs 1.

Danach betrifft die Erfindung ein bandförmiges Element, nämlich zur Bildung eines Zaum-Stirnbands, oder zur Bildung eines auf der Oberseite und in der jeweiligen Längsrichtung anbringbaren Dekorationsbands für Gürtel, Armbänder oder Halsbänder.

Ferner betrifft die vorliegende Erfindung ein Zaum-Stirnband, insbesondere ein Pferdezaum-Stirnband, nach Anspruch 5 sowie ein Gegenstück für ein entsprechendes Zaum-Stirnband gemäß Anspruch 15.

Schließlich wird im Rahmen der Erfindung vorgeschlagen ein Dekorationsband nach Anspruch 16 sowie ein zugehöriges Gegenstück nach Anspruch 24, ein sich in eine Längsrichtung erstreckenden Grundkörper, nämlich Gürtel, Armband oder Halsband, mit einem derartigen Dekorationsband, gemäß Anspruch 25, ein Gürtel, Armband oder Halsband gemäß Anspruch 26 sowie ein zugehöriges Gegenstück gemäß Anspruch 37.

Aus DE 20 2010 007 009 U1 ist ein Pferdezaum-Stirnband mit austauschbaren Dekorationselementen und magnetischer Befestigung bekannt. Das Stirnband weist anstelle fest angebrachter Dekorationselemente einen Magnetstreifen auf, und ein auswechselbares zusätzliches Dekorationsband, umfassend einen weiteren Magnetstreifen mit Dekorationselementen, bspw. Strass- oder Schmucksteine, Perlen oder Figuren, kann austauschbar auf dem Stirnband angebracht werden.

DE 20 2015 003 530 U1 zeigt ein Pferdezaum-Stirnband, bei dem ein Teil des Lederbandes durch einen fest eingearbeiteten Magnetstreifen ersetzt ist. Ein als Magnetband ausgestaltetes zusätzliches Dekorationsband mit Dekorationselementen kann dann austauschbar auf dem fest eingearbeiteten Magnetstreifen des Stirnbands befestigt werden.

In technisch vergleichbarer Weise offenbart DE 20 2010 007 166 U1 ein Halsband für Hunde mit durch Magnetstreifen befestigtem und austauschbarem Dekorationselement, DE 20 2010 009 377 U1 einen Ledergürtel mit austauschbaren Dekorationselementen und magnetischer Befestigung, und DE 20 2012 000 029 U1 ein Lederarmband mit magnetisch austauschbaren Dekorationselementen.

Bei dem vorbekannten Stand der Technik ist kritisch, dass stets ein bandförmiger Grundkörper zur Verfügung stehen muss und dieser so umgearbeitet bzw. angepasst werden muss, dass der Grundkörper mit einem Magnetstreifen versehen werden kann. Eine Verwendung des mit einem Magnetstreifen versehenen Grundkörpers ohne aufgelegtes Dekorationsband wird üblicherweise vermieden, da der Magnetstreifen alleine gerade nicht den ansonsten bezweckten dekorativen Effekt entfaltet.

Bei den Lösungen gemäß Stand der Technik müssen die Magnetstreifen des Grundkörpers sowie des aufzusetzenden Dekorationsbandes genau aufeinander passend ausgerichtet werden, was etwas Sorgfalt erfordert. Wird der Grundkörper zusammen mit dem aufgelegten und magnetisch gehaltenen Dekorationsband entlang seiner Längsachse verformt, neigt das Dekorationsband aufgrund seiner eigenen Steifigkeit dazu, sich vom Grundkörper abzulösen.

Der vorliegenden Erfindung liegt die Aufgabe zugrunde, die sich aus dem Stand der Technik ergebenden Nachteile zu überwinden.

Ferner liegt die Aufgabe zugrunde, ein bandförmiges Element, und in diesem Zusammenhang insbesondere auch ein Zaum-Stirnband sowie ein Dekorationsband für Grundkörper anzugeben, wobei eine einfache und sichere Befestigung bei vielseitiger Verwendbarkeit und vergleichsweise geringen Bereitstellungskosten realisiert ist.

Einen Beitrag zur Lösung der vorstehend genannten Aufgabe leistet ein bandförmiges Element der eingangs genannten Art, welches durch die kennzeichnenden Merkmale des Anspruchs 1 weitergebildet ist.

Danach ist das erfindungsgemäße bandförmige Element so ausgestaltet und weitergebildet, dass an beiden Enden des bandförmigen Elements jeweils ein magnetisches Element zur lösbaren Verbindung des jeweiligen Endes an einem zweiten magnetischen Element angeordnet ist.

Einen Beitrag zur Lösung der vorstehend genannten Aufgabe leisten ferner ein Zaum-Stirnband nach den Merkmalen des Anspruchs 5, ein Dekorationsband nach Anspruch 16, ein Grundkörper mit einem derartigen Dekorationsband gemäß Anspruch 25, ein Gürtel, Armband oder Halsband gemäß Anspruch 26 sowie zugehörige Gegenstücke gemäß den Ansprüchen 15, 24 und 37.

Das erfindungsgemäße Zaum-Stirnband, insbesondere Pferdezaum-Stirnband, umfasst ein erfindungsgemäßes bandförmiges Element und zwei Gegenstücke, welche jeweils ein zweites magnetisches Element aufweisen, wobei jeweils ein Ende des bandförmigen Elements lösbar an oder in einem Gegenstück, nämlich an dem zweiten magnetischen Element des Gegenstücks, festlegbar bzw. festgelegt ist.

Weiter erfindungsgemäß vorgeschlagen wird ein Dekorationsband für Grundkörper, welche sich in eine Längsrichtung erstrecken, insbesondere Gürtel, Armbänder oder Halsbänder, wobei das Dekorationsband auf der Oberseite und in der jeweiligen Längsrichtung des Grundkörpers anbringbar ist, mit einem erfindungsgemäßen bandförmigen Element, und mit zwei Gegenstücken, welche jeweils ein zweites magnetisches Element aufweisen, wobei jeweils ein Ende des bandförmigen Elements lösbar an oder in einem Gegenstück, nämlich an dem zweiten magnetischen Element des Gegenstücks, festlegbar bzw. festgelegt ist.

Von der Erfindung umfasst ist auch ein Grundkörper, der sich in eine Längsrichtung erstreckt, nämlich ein Gürtel, ein Armband oder ein Halsband, mit einem auf der Oberseite des Grundkörpers und in Längsrichtung des Grundkörpers angebrachten erfindungsgemäßen Dekorationsband.

Ferner von der Erfindung umfasst ist auch ein Gürtel, ein Armband oder ein Halsband, mit einem erfindungsgemäßen bandförmigen Element, und mit zwei Gegenstücken, welche jeweils ein zweites magnetisches Element aufweisen, wobei jeweils ein Ende des bandförmigen Elements lösbar an oder in einem Gegenstück, nämlich an dem zweiten magnetischen Element des Gegenstücks, festlegbar bzw. festgelegt ist.

Schließlich sind die erfindungsgemäßen Gegenstücke Teil des Zaum-Stirnbands, des Dekorationsbands oder des Gürtels, Armbands oder Halsbands.

Vorteilhafte Ausgestaltungen und Weiterbildungen der Erfindung sind Gegenstand der jeweils nachgeordneten Ansprüche.

Den erfindungsgemäßen Gegenständen liegt die Idee zugrunde, dass an beiden Enden des bandförmigen Elements jeweils ein magnetisches Element zur lösbaren Verbindung des jeweiligen Endes an einem zweiten magnetischen Element angeordnet ist. Somit wird das bandförmige Element jeweils nur an seinen Enden gehalten und kann damit entlang seiner Längsachse eine maximale Flexibilität aufweisen.

Mit anderen Worten weist das bandförmige Element vorzugsweise an jedem Ende mindestens ein magnetisches Element auf, wobei die magnetischen Elemente der beiden Enden getrennt voneinander ausgebildet sind und außer über das bandförmige Element keine Verbindung zueinander aufweisen.

Es ist damit sicher vermieden, dass sich das bandförmige Element aufgrund einer Verformung entlang der Längsachse von der das Element haltenden Unterlage ablöst, da eine Festlegung des bandförmigen Elements entlang seiner Längsachse - insbesondere mit einem darunter angeordneten Magnetstreifen - nunmehr entfallen kann.

Das bandförmige Element kann - insbesondere als Mittelteil eines Dekorationsbands mit verschiedenen Dekorationselementen - sehr schnell und sicher ausgetauscht bzw. befestigt werden, indem dessen Enden einfach in die Gegenstücke eingeführt werden. Ein genaues Ausrichten und Anheften an einen darunter angeordneten Magnetstreifen kann somit entfallen.

Durch den Entfall eines Magnetstreifens kann ferner ein bandförmiger Grundkörper, welcher einen Magnetstreifen aufweist, komplett entfallen. Sofern dennoch ein bandförmiger Grundkörper vorgesehen wird, auf den das bandförmige Element aufgelegt werden soll, muss dieser jedenfalls nicht mehr umgearbeitet und mit einem Magnetstreifen versehen werden.

Die erfindungsgemäßen Gegenstände erweisen sich daher auch als besonders vielseitig verwendbar, während gleichzeitig die Bereitstellungskosten gesenkt werden können.

Als "magnetisches Element" wird im Rahmen der Erfindung wahlweise ein Permanentmagnet oder auch ein Element aus einem ferrimagnetischen oder ferromagnetischen Material verstanden. Eine magnetische Anziehung zwischen einem ersten magnetischen Element und einem zweiten magnetischen Element nach dem Verständnis der Erfindung umfasst sowohl die Anziehung zwischen zwei Permanentmagneten als auch die Anziehung zwischen einem Permanentmagneten und einem Element aus einem ferrimagnetischen oder ferromagnetischen Material. Hierzu wird auf den Eintrag "Dauermagnet" in der deutschsprachigen Wikipedia^{®} verwiesen (Abrufdatum 15.05.2019).

Als "Dekorationselement" wird im Rahmen der Erfindung verstanden jede Art von Verzierung oder Ausschmückung, Strass- oder Schmucksteine, Perlen oder Figuren, oder dergleichen Elemente.

Im Folgenden werden die erfindungsgemäßen Aspekte weiter erörtert, wozu teilweise auf nicht limitierende vorteilhafte Ausgestaltungen und Weiterbildungen der Erfindung Bezug genommen wird. Die Merkmale vorteilhafter Weiterbildungen lassen sich dabei einzeln oder auch in beliebiger Kombination realisieren, wodurch weitere vorteilhafte Ausgestaltungen der Erfindung geschaffen werden.

Im Rahmen der gesamten vorliegenden Erörterung von Ausgestaltungen, Weiterbildungen, Ausführungsbeispielen und Ausführungsformen des erfindungsgemäßen Handsenders werden auch Verwendungen der erfindungsgemäßen Gegenstände beschrieben. Diese Verwendungen liegen dabei ausdrücklich ebenfalls im Rahmen der vorliegenden Erfindung.

In einer ersten bevorzugten Weiterbildung des erfindungsgemäßen bandförmigen Elements ist das Element aus Leder oder aus flexiblem Kunststoff gebildet.

Bevorzugt ist eine Ausgestaltung des bandförmigen Elements, welches auf seiner Oberseite Dekorationselemente aufweist.

Eine weitere vorteilhafte Ausführungsform des bandförmigen Elements zeichnet sich dadurch aus, dass das magnetische Element teilweise oder vollständig von dem Material des bandförmigen Elements umschlossen ist. Mit anderen Worten kann das erste magnetische Element teilweise oder vollständig in das Material des bandförmigen Elements eingebettet sein.

In einer ersten bevorzugten Weiterbildung des erfindungsgemäßen Zaum-Stirnbands ist das Gegenstück als Hülse ausgeführt, in welcher das zweite magnetische Element angeordnet ist, und in die ein Ende des bandförmigen Elements zur lösbaren Festlegung des Endes an dem Gegenstück, nämlich an dessen zweitem magnetischen Element, einführbar bzw. eingeführt ist. Somit ergibt sich eine besonders einfache und sichere Festlegung des ersten magnetischen Elements des bandförmigen Elements an dem zweiten magnetischen Element des Gegenstücks, nämlich einfach durch Einschieben des jeweiligen Endes des bandförmigen Elements in das Gegenstück, nämlich in die Hülse.

Das Gegenstück, insbesondere als Hülse oder eine solche Hülse umfassend, kann vorzugsweise fest in das Zaumzeug integriert sein. Somit ergibt sich eine besonders sichere Festlegung des bandförmigen Elements.

Alternativ, jedoch ebenfalls bevorzugt, kann das Gegenstück zur Anbringung an ein Zaumzeug eine Schlaufe aufweisen, deren Durchgang im Wesentlichen senkrecht zur Längsrichtung des bandförmigen Elements ausgerichtet ist. Mit anderen Worten kann bei dieser Ausführungsform das Gegenstück in einen Backenriemen des Zaumzeugs eingefädelt werden, und kann dann zusammen mit dem gegenüberliegenden Gegenstück das bandförmige Element in einer der vorbeschriebenen Weisen aufnehmen.

Vorzugsweise ist auch das Gegenstück aus Leder oder aus flexiblem Kunststoff gebildet.

In einer weiteren vorteilhaften Ausgestaltung des erfindungsgemäßen Zaum-Stirnbands ist das Gegenstück aus einem Materialstreifen gefertigt, wobei der Materialstreifen zur Bildung einer Hülse, und ggf. zur Bildung einer Schlaufe, einen doppellagigen Bereich aufweist. In die entstehende Hülse kann dann das Ende des bandförmigen Elements besonders einfach eingeführt werden. Zusätzlich kann die Bildung eines doppellagigen Bereichs mit der Bildung einer Schlaufe verknüpft werden, wodurch sich bspw. die Möglichkeit des Einfädelns des Gegenstücks in ein Zaumzeug ergeben kann, nämlich wie bereits weiter oben erwähnt.

In einer vorteilhaften Weiterbildung der letztgenannten Ausführungsform ist ferner das zweite magnetische Element innerhalb des doppellagigen Bereichs aufgenommen, und kann dort insbesondere verklebt oder vernäht sein. Das zweite magnetische Element des Gegenstücks kann somit vollständig innerhalb des Gegenstücks, von außen kaum oder gar nicht sichtbar, angeordnet werden.

### Figuren

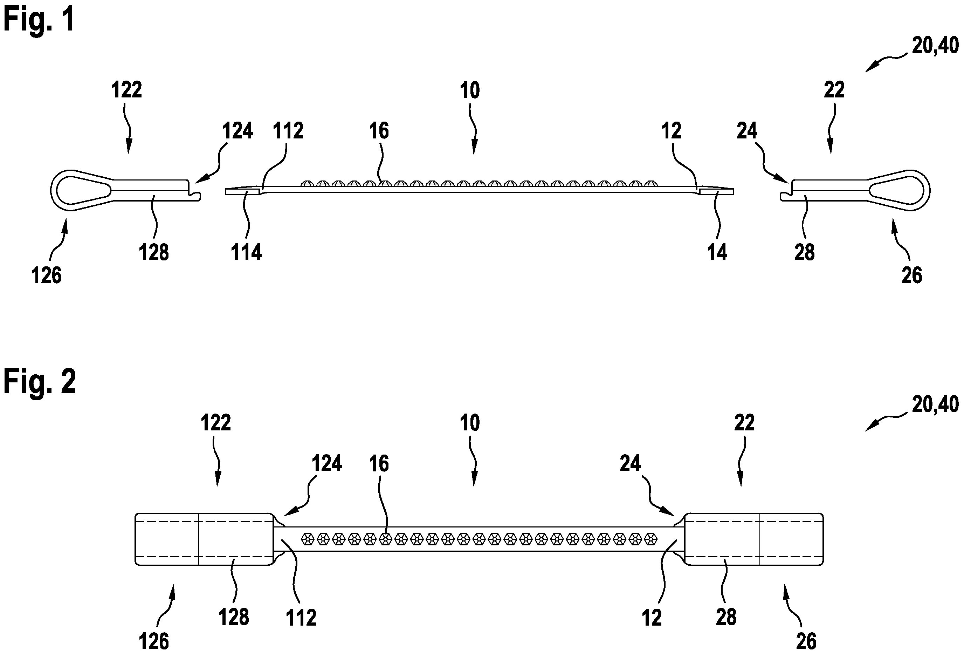

Ergänzend bzw. zusätzlich zu den bereits erörterten vorteilhaften Ausgestaltungen und Weiterbildungen der Lehre werden in der Zeichnung im Umfang der **Figuren 1 bis 4** dargestellte Ausführungsbeispiele von erfindungsgemäßen Gegenständen und deren Verwendungen im Folgenden näher erläutert. Die anhand der Zeichnung erörterten Beispiele schränken die Erfindung jedoch nicht auf die gezeigten Beispiele ein. Bei der Erörterung der Ausführungsbeispiele anhand der Zeichnung werden auch im Allgemeinen bevorzugte Ausgestaltungen und Weiterbildungen der Lehre aufgezeigt.

Weiterbildungen der vorstehend beschriebenen vorteilhaften Ausgestaltungen mit Merkmalen der nachstehenden Ausführungsbeispiele bilden dabei genau wie Weiterbildungen der nachstehend beschriebenen Ausführungsbeispiele mit Merkmalen der vorstehend beschriebenen Ausgestaltungen ausdrücklich weitere vorteilhafte Ausgestaltungen der Erfindung, und sind damit Teil der vorliegenden Offenbarung.

Es zeigen:
Figur 1 eine seitliche Darstellung eines bevorzugten Ausführungsbeispiels des erfindungsgemäßen bandförmigen Elements und gleichzeitig eines bevorzugten Ausführungsbeispiels des erfindungsgemäßen Zaum-Stirnbands in einer Einzeldarstellung seiner Elemente,
Figur 2 eine Aufsicht auf die Oberseite des bevorzugten Ausführungsbeispiels des erfindungsgemäßen bandförmigen Elements aus Fig. 1 und gleichzeitig des bevorzugten Ausführungsbeispiels des erfindungsgemäßen Zaum-Stirnbands aus Fig. 1 in einer Darstellung mit zusammengeführten Elementen,
Figur 3A eine seitlich gesehene, schematische Schnittansicht eines Endes des bandförmigen Elements aus den Fig. 1 und 2 in einer Gegenüberstellung mit dem zugeordneten Gegenstück des Zaum-Stirnbands,
Figur 3B den Gegenstand aus Fig. 3A, wobei hier das Ende des bandförmigen Elements in das zugeordnete Gegenstück des Zaum-Stirnbands eingeschoben ist, und
Figur 4 ein bevorzugtes Ausführungsbeispiel eines erfindungsgemäßen Dekorationsbands, welches auf einem sich in eine Längsrichtung erstreckenden Grundkörper, hier ein Gürtel, angebracht ist.

**Fig. 1** zeigt eine seitliche Darstellung eines bevorzugten Ausführungsbeispiels des erfindungsgemäßen bandförmigen Elements 10 und gleichzeitig eines bevorzugten Ausführungsbeispiels des erfindungsgemäßen Zaum-Stirnbands 20 in einer Einzeldarstellung seiner Elemente.

Das bandförmige Element 10 ist hier aus Leder gefertigt und dient zur Bildung des Zaum-Stirnbands 20.

Erfindungsgemäß ist an beiden Enden 12, 112 des bandförmigen Elements 10 jeweils ein magnetisches Element 14, 114 zur lösbaren Verbindung des jeweiligen Endes 12, 112 an einem zweiten magnetischen Element angeordnet. Die zweiten magnetischen Elemente sind hier nicht dargestellt, da sie in den weiter unten beschriebenen Gegenstücken für das bandförmige Element 10 angeordnet sind.

Das bandförmige Element 10 weist auf seiner Oberseite Dekorationselemente 16 auf, welche hier als Schmuck- bzw. Glassteine ausgebildet sind.

Die Enden 12, 112 des bandförmigen Elements 10 sind in diesem Beispiel abgeflacht und mit der Oberseite der zugehörigen magnetischen Elemente 14, 114 verklebt worden.

Somit ist ein bandförmiges Element 10 realisiert, welches jeweils nur an seinen Enden 12, 112 gehalten werden kann und damit entlang seiner Längsachse eine maximale Flexibilität aufweist. Eine einfache und rasche Austauschbarkeit ist dabei ebenfalls gegeben.

Das ebenfalls in Fig. 1 in seinen Einzelteilen dargestellte bevorzugte Ausführungsbeispiel des erfindungsgemäßen Zaum-Stirnbands 20, hier als Pferdezaum-Stirnband, weist in der Mitte zunächst das bandförmige Element 10 auf.

Ferner umfasst das Zaum-Stirnband 20 zwei Gegenstücke 22, 122, welche jeweils ein zweites magnetisches Element (hier nicht sichtbar) aufweisen, wobei jeweils ein Ende 12, 112 des bandförmigen Elements 10 lösbar in einem Gegenstück 22, 122, nämlich an dem zweiten magnetischen Element des Gegenstücks 22, 122, festlegbar ist.

Hierzu ist jedes Gegenstück 22, 122 als Hülse 24, 124 ausgeführt, in welcher das zweite magnetische Element angeordnet ist. In diese Hülse 24, 124 lässt sich ein Ende 12, 112 des bandförmigen Elements 10 zur lösbaren Festlegung des Endes 12, 112 an dem Gegenstück 22, 122 einführen. Dabei kommt das magnetische Element 14, 114 an dem zweiten magnetischen Element im Inneren des Gegenstücks 22, 122 bzw. der Hülse 24, 124 zu liegen, und zwischen den entstehenden magnetischen Paarungen wird eine in Längsrichtung des bandförmigen Elements 10 wirkende Haltekraft aufgebaut.

Das Gegenstück 22, 122 weist zur Anbringung an ein Zaumzeug eine Schlaufe 26, 126 auf, deren Durchgang im Wesentlichen senkrecht zur Längsrichtung des bandförmigen Elements 10 ausgerichtet ist.

Ferner ist das Gegenstück 22, 122 hier ebenfalls aus Leder gebildet, und weist im Einzelnen einen Materialstreifen aus Leder auf, wobei der Materialstreifen zur Bildung der Hülse 24, 124 und zur Bildung der Schlaufe 26, 126 einen doppellagigen Bereich 28, 128 aufweist.

Das zweite magnetische Element ist dabei innerhalb des doppellagigen Bereichs 28, 128 aufgenommen.

Das in Fig. 1 dargestellte Zaum-Stirnband 20 kann alternativ auch allgemein als Ausführungsform eines erfindungsgemäßen Dekorationsbands 40 aufgefasst werden, welches nämlich allgemein ein erfindungsgemäßes bandförmiges Element 10 sowie zwei zugeordnete erfindungsgemäße Gegenstücke 22, 122 aufweist.

**Fig. 2** zeigt eine Aufsicht auf die Oberseite des bevorzugten Ausführungsbeispiels des erfindungsgemäßen bandförmigen Elements 10 aus Fig. 1 und gleichzeitig des bevorzugten Ausführungsbeispiels des erfindungsgemäßen Zaum-Stirnbands 20 aus Fig. 1 in einer Darstellung mit zusammengeführten Elementen.

Mit anderen Worten sind die Enden 12, 112 des bandförmigen Elements 10 hier in bestimmungsgemäßer Weise in die Gegenstücke 22, 122 bzw. die Hülsen 24, 124 eingeführt worden, wodurch die magnetischen Elemente 14, 114 (hier nicht mehr sichtbar) des bandförmigen Elements 10 an die jeweils zugeordneten zweiten magnetischen Elemente (nicht sichtbar) der Gegenstücke 22, 122 herangeführt worden sind. Aufgrund der sich hierdurch jeweils zwischen dem magnetischen Element 14, 114 und dem zugeordneten zweiten magnetischen Element aufbauenden magnetischen Anziehung wird das bandförmige Element 10 in der Längsrichtung flexibel, aber gleichzeitig sicher, und auch wieder lösbar in den Gegenstücken 22, 122 gehalten.

Die Darstellung in Fig. 2 zeigt im Ergebnis die sich während der bestimmungsgemäßen Gebrauchs des gezeigten Ausführungsbeispiels des Zaum-Stirnbands 20 bzw. einer Ausführungsform eines erfindungsgemäßen Dekorationsbands 40 ergebende Außenansicht des Gegenstands.

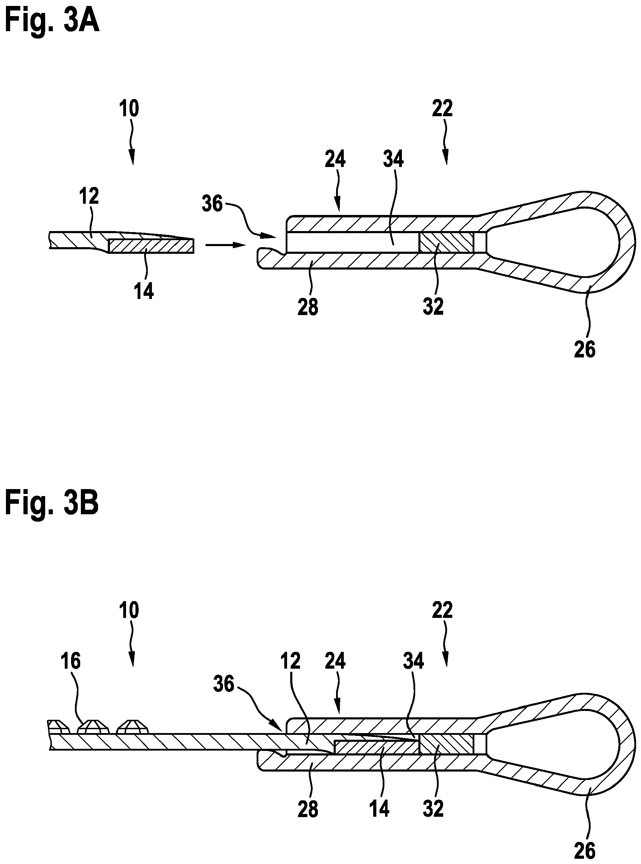

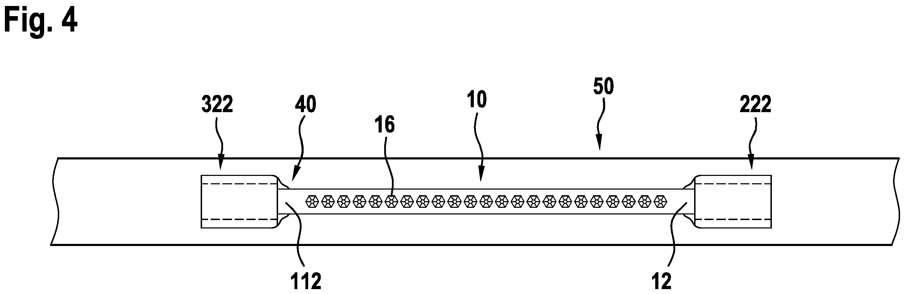

In Bezug auf Fig. 2 ist ansonsten darauf zu verweisen, dass bereits in Fig. 1 dargestellte und diesbezüglich bereits weiter oben erläuterte Bezugszeichen aus Gründen der Übersichtlichkeit in Fig. 2 zum Teil nicht erneut aufgetragen worden sind und/oder anhand von Fig. 2 zum Teil nicht erneut erläutert werden. Für die Erläuterung solcher Bezugszeichen und der zugehörigen technischen Merkmale wird zur Vermeidung von Wiederholungen vollumfänglich auf die oben stehende Beschreibung zu Fig. 1 verwiesen. Dies gilt in entsprechender Weise auch für die nachfolgenden Fig. 3A, 3B und 4.

**Fig. 3A** zeigt eine seitlich gesehene, schematische Schnittansicht eines Endes 12 des bandförmigen Elements 10 aus den Fig. 1 und 2 in einer Gegenüberstellung mit dem zugeordneten Gegenstück 22 des Zaum-Stirnbands 20 bzw. einer Ausführungsform des erfindungsgemäßen Dekorationsbands 40.

Wie bereits vorstehend beschrieben, weist das Ende 12 des bandförmigen Elements 10 ein magnetisches Element 14 auf. Das gegenüberliegende Gegenstück 22 weist einen Materialstreifen aus Leder auf, wobei der Materialstreifen zur Bildung der Hülse 24 und zur Bildung der Schlaufe 26 einen doppellagigen Bereich 28 aufweist.

Das zweite magnetische Element 32 ist dabei innerhalb des doppellagigen Bereichs 28 aufgenommen. Durch das Einbringen niedriger Seitenwände 34 zwischen den doppelten Lagen des Materialstreifens ist ein Kanal 36 gebildet, in den das Ende 12 einschiebbar ist. Ferner wird so Platz für das zweite magnetische Element 32 geschaffen, welches im hinteren Bereich des Kanals 36 angeordnet und verklebt ist.

Alternativ oder zusätzlich kann das zweite magnetische Element 32 auch in dem Gegenstück 22 vernäht werden.

Für den Fall, dass allgemein ein Dekorationsband 40 realisiert werden soll, oder auch für den Fall, dass bei einem Zaum-Stirnband die Gegenstücke fest in das Zaumzeug integriert werden sollen, kann eine Ausführungsform des Gegenstücks 22 ohne Schlaufe 26, ansonsten jedoch wie in Fig. 3A und 3B gezeigt, realisiert werden.

**Fig. 3B** zeigt den Gegenstand aus Fig. 3A, wobei hier das Ende 12 des bandförmigen Elements 10 in das zugeordnete Gegenstück 22 des Zaum-Stirnbands 20 eingeschoben ist. Das magnetische Element 14 des Endes 12 ist bis auf das zweite magnetische Element 32 des Gegenstücks 22 aufgeschoben worden. Aufgrund der sich hierdurch zwischen den Elementen 14, 32 aufbauenden magnetischen Anziehung wird das Ende 12 somit sicher, aber andererseits rasch lösbar, in dem Gegenstück 22 gehalten.

**Fig. 4** zeigt ein bevorzugtes Ausführungsbeispiel eines erfindungsgemäßen Dekorationsbands 40, welches auf einem sich in eine Längsrichtung erstreckenden Grundkörper 50, hier ein Gürtel, angebracht ist.

Das Dekorationsband 40 ist vorzugsweise vorgesehen für Grundkörper 50, welche sich in eine Längsrichtung erstrecken, insbesondere Gürtel, Armbänder oder Halsbänder. Entsprechende Grundkörper 50 lassen sich somit einfach und rasch mit wechselnden Dekorationsbändern 40 bzw. auswechselbaren bandförmigen Elementen 10, welche vorzugsweise Dekorationselemente 16 tragen, verzieren.

Das Dekorationsband 40 ist hier auf der Oberseite und in der Längsrichtung des Grundkörpers 50 angebracht. Der mittlere Teil des Dekorationsbands 40 kann vorzugsweise aus einem bereits anhand der vorhergehenden Figuren beschriebenen bandförmigen Element 10 bestehen.

Ferner sind auf dem Grundkörper zwei Gegenstücke 222, 322 angebracht. Diese Gegenstücke weisen in bereits beschriebener Weise jeweils ein zweites magnetisches Element (hier nicht sichtbar) auf.

Die Gegenstücke 222, 322 können dabei wie in Fig. 3A und 3B beschrieben aufgebaut sein, wobei die dortige Schlaufe 26 jedoch entfallen kann.

Auch hier ist jeweils ein Ende 12, 112 des bandförmigen Elements 10 lösbar an oder in einem Gegenstück 222, 322, nämlich an dem zweiten magnetischen Element des Gegenstücks 222, 322, festgelegt.

Der Grundkörper 50, der sich in eine Längsrichtung erstreckt, hier als Gürtel, alternativ jedoch bspw. auch als Armband oder Halsband, weist damit auf seiner Oberseite ein in Längsrichtung des Grundkörpers 50 angebrachtes Dekorationsband 40 auf, dessen bandförmiges Element 10 sicher magnetisch gehalten wird, jedoch andererseits rasch und bequem austauschbar ist.

### Ausführungsformen

Ergänzend bzw. zusätzlich zu den bereits erörterten vorteilhaften Ausgestaltungen, Weiterbildungen und Ausführungsbeispielen wird die Erfindung nachfolgend anhand weiterer konkreter bevorzugter Ausführungsformen beschrieben, welche die Erfindung jedoch nicht auf die beschriebenen Ausführungsformen einschränken. Diese Ausführungsformen sind ausdrücklich Teil der vorliegenden Beschreibung.

Weiterbildungen der vorstehend beschriebenen vorteilhaften Ausgestaltungen und Ausführungsbeispiele mit Merkmalen der nachstehenden Ausführungsformen bilden dabei genau wie Weiterbildungen der nachstehend beschriebenen Ausführungsformen mit Merkmalen der vorstehend beschriebenen Ausgestaltungen und Ausführungsbeispiele ausdrücklich weitere vorteilhafte Ausgestaltungen der Erfindung, und sind damit Teil der vorliegenden Offenbarung.

Die unten angegebene Ausführungsform 18 beschreibt einen Aspekt der Erfindung, in dem ein Gürtel, ein Armband oder ein Halsband wahlweise auch ohne einen darunter angeordneten Grundkörper gebildet werden kann. Insofern kann nach diesem Aspekt der Erfindung das erfindungsgemäße bandförmige Element mit zwei jeweils an den Enden angeordneten Gegenstücken auch unmittelbar als Gürtel, Armband oder Halsband dienen. Je nach Zugbelastung des Gegenstand während des Gebrauchs und der erreichbaren Belastbarkeit der Festlegung der Enden des bandförmigen Elements in den Gegenstücken kann dann alternativ auch die Auslegung als Dekorationsband auf einem zusätzlichen Grundkörper erfolgen, nämlich gemäß Ausführungsform 17.

Ausführungsform 1: Bandförmiges Element zur Bildung eines Zaum-Stirnbands, wobei an beiden Enden des bandförmigen Elements jeweils ein magnetisches Element zur lösbaren Verbindung des jeweiligen Endes an einem zweiten magnetischen Element angeordnet ist.

Ausführungsform 2: Bandförmiges Element zur Bildung eines auf der Oberseite und in der jeweiligen Längsrichtung eines Grundkörpers, insbesondere eines Gürtels, eines Armbands oder eines Halsbands, anbringbaren Dekorationsbands für einen Grundkörper, wobei an beiden Enden des bandförmigen Elements jeweils ein magnetisches Element zur lösbaren Verbindung des jeweiligen Endes an einem zweiten magnetischen Element angeordnet ist.

Ausführungsform 3: Bandförmiges Element zur Bildung eines Gürtels, eines Armbands oder eines Halsbands, wobei an beiden Enden des bandförmigen Elements jeweils ein magnetisches Element zur lösbaren Verbindung des jeweiligen Endes an einem zweiten magnetischen Element angeordnet ist.

Ausführungsform 4: Bandförmiges Element nach einer der vorhergehenden Ausführungsformen, wobei das bandförmige Element aus Leder oder aus flexiblem Kunststoff gebildet ist.

Ausführungsform 5: Bandförmiges Element nach einer oder mehreren der vorangehenden Ausführungsformen, wobei das bandförmige Element auf seiner Oberseite Dekorationselemente aufweist.

Ausführungsform 6: Bandförmiges Element nach einer oder mehreren der vorangehenden Ausführungsformen, wobei das magnetische Element teilweise oder vollständig von dem Material des bandförmigen Elements umschlossen ist.

Ausführungsform 7: Zaum-Stirnband, insbesondere Pferdezaum-Stirnband, mit einem bandförmigen Element nach einer oder mehreren der vorangehenden Ausführungsformen, und mit zwei Gegenstücken, welche jeweils ein zweites magnetisches Element aufweisen, wobei jeweils ein Ende des bandförmigen Elements lösbar an oder in einem Gegenstück, nämlich an dem zweiten magnetischen Element des Gegenstücks, festlegbar bzw. festgelegt ist.

Ausführungsform 8: Zaum-Stirnband nach der vorhergehenden Ausführungsform, wobei das Gegenstück als Hülse ausgeführt ist.

Ausführungsform 9: Zaum-Stirnband nach der vorhergehenden Ausführungsform, wobei das zweite magnetische Element in der Hülse angeordnet ist.

Ausführungsform 10: Zaum-Stirnband nach einer oder mehreren der vorhergehenden Ausführungsformen 7 bis 9, wobei ein Ende des bandförmigen Elements zur lösbaren Festlegung des Endes an dem Gegenstück, nämlich an dessen zweitem magnetischen Element, in die Hülse einführbar ist bzw. eingeführt ist.

Ausführungsform 11: Zaum-Stirnband nach einer oder mehreren der vorhergehenden Ausführungsformen 7 bis 10, wobei das Gegenstück fest in ein Zaumzeug integriert ist.

Ausführungsform 12: Zaum-Stirnband nach einer oder mehreren der vorhergehenden Ausführungsformen 7 bis 11, wobei das Gegenstück zur Anbringung an ein Zaumzeug eine Schlaufe aufweist, deren Durchgang im Wesentlichen senkrecht zur Längsrichtung des bandförmigen Elements ausgerichtet ist.

Ausführungsform 13: Zaum-Stirnband nach einer oder mehreren der vorhergehenden Ausführungsformen 7 bis 12, wobei das Gegenstück aus Leder oder aus flexiblem Kunststoff gebildet ist.

Ausführungsform 14: Zaum-Stirnband nach einer oder mehreren der vorhergehenden Ausführungsformen 7 bis 13, wobei das Gegenstück aus einem Materialstreifen gefertigt ist.

Ausführungsform 15: Zaum-Stirnband nach der vorhergehenden Ausführungsform, wobei der Materialstreifen zur Bildung einer Hülse, und ggf. zur Bildung einer Schlaufe, einen doppellagigen Bereich aufweist.

Ausführungsform 16: Zaum-Stirnband nach einer der oder beiden vorhergehenden Ausführungsformen 14 und 15, wobei das zweite magnetische Element innerhalb des doppellagigen Bereichs aufgenommen, und insbesondere verklebt oder vernäht, ist.

Ausführungsform 17: Dekorationsband für Grundkörper, welche sich in eine Längsrichtung erstrecken, insbesondere Gürtel, Armbänder oder Halsbänder, wobei das Dekorationsband auf der Oberseite und in der jeweiligen Längsrichtung des Grundkörpers anbringbar ist, mit einem bandförmigen Element nach einer oder mehreren der vorhergehenden Ausführungsformen 1 bis 6, und mit zwei Gegenstücken, welche jeweils ein zweites magnetisches Element aufweisen, wobei jeweils ein Ende des bandförmigen Elements lösbar an oder in einem Gegenstück, nämlich an dem zweiten magnetischen Element des Gegenstücks, festlegbar bzw. festgelegt ist.

Ausführungsform 18: Gürtel, Armband oder Halsband, mit einem bandförmigen Element nach einer oder mehreren der vorhergehenden Ausführungsformen 1 bis 6, und mit zwei Gegenstücken, welche jeweils ein zweites magnetisches Element aufweisen, wobei jeweils ein Ende des bandförmigen Elements lösbar an oder in einem Gegenstück, nämlich an dem zweiten magnetischen Element des Gegenstücks, festlegbar bzw. festgelegt ist.

Ausführungsform 19: Gürtel, Armband oder Halsband nach Ausführungsform 18, umfassend ein Dekorationsband nach Ausführungsform 17.

Ausführungsform 20: Gürtel, Armband oder Halsband nach Ausführungsform 18 oder 19, wobei beide Gegenstücke aneinander festgelegt sind.

Ausführungsform 21: Gürtel, Armband oder Halsband nach einer der vorhergehenden Ausführungsformen 18 bis 20, wobei beide Gegenstücke in einer gemeinsamen Basis oder auf einer gemeinsamen Unterlage festgelegt sind.

Ausführungsform 22: Gürtel, Armband oder Halsband nach einer der vorhergehenden Ausführungsformen 18 bis 21, wobei die Gegenstücke so ausgerichtet sind, dass deren bestimmungsgemäße Anschlüsse für das bandförmige Element voneinander wegweisen.

Ausführungsform 23: Dekorationsband nach Ausführungsform 17, oder Gürtel, Armband oder Halsband nach einer der vorhergehenden Ausführungsformen 18 bis 22, wobei das Gegenstück als Hülse ausgeführt ist.

Ausführungsform 24: Dekorationsband nach der vorhergehenden Ausführungsform, oder Gürtel, Armband oder Halsband nach der vorhergehenden Ausführungsform, wobei das zweite magnetische Element in der Hülse angeordnet ist.

Ausführungsform 25: Dekorationsband nach einer der oder beiden vorhergehenden Ausführungsformen 23 und 24, oder Gürtel, Armband oder Halsband nach einer der oder beiden vorhergehenden Ausführungsformen 23 und 24, wobei ein Ende des bandförmigen Elements zur lösbaren Festlegung des Endes an dem Gegenstück, nämlich an dessen zweitem magnetischen Element, in die Hülse einführbar ist bzw. eingeführt ist.

Ausführungsform 26: Dekorationsband nach einer oder mehreren der vorhergehenden Ausführungsformen 17 und 23 bis 25, oder Gürtel, Armband oder Halsband nach einer oder mehreren der vorhergehenden Ausführungsformen 18 bis 25, wobei das Gegenstück aus Leder oder aus flexiblem Kunststoff gebildet ist.

Ausführungsform 27: Dekorationsband nach einer oder mehreren der vorhergehenden Ausführungsformen 17 und 23 bis 26, oder Gürtel, Armband oder Halsband nach einer oder mehreren der vorhergehenden Ausführungsformen 18 bis 26, wobei das Gegenstück aus einem Materialstreifen gefertigt ist.

Ausführungsform 28: Dekorationsband nach einer oder mehreren der vorhergehenden Ausführungsformen 17 und 23 bis 27, oder Gürtel, Armband oder Halsband nach einer oder mehreren der vorhergehenden Ausführungsformen 18 bis 27, wobei der Materialstreifen zur Bildung einer Hülse einen doppellagigen Bereich aufweist.

Ausführungsform 29: Dekorationsband nach einer oder mehreren der vorhergehenden Ausführungsformen 17 und 23 bis 28, oder Gürtel, Armband oder Halsband nach einer oder mehreren der vorhergehenden Ausführungsformen 18 bis 28, wobei das zweite magnetische Element innerhalb des doppellagigen Bereichs aufgenommen, und insbesondere verklebt oder vernäht, ist.

Ausführungsform 30: Gegenstück, nämlich für ein Zaum-Stirnband nach einer oder mehreren der vorhergehenden Ausführungsformen 7 bis 16, oder für ein Dekorationsband nach einer oder mehreren der vorhergehenden Ausführungsformen 17 und 23 bis 29, oder für einen Gürtel, ein Armband oder ein Halsband nach einer oder mehreren der vorhergehenden Ausführungsformen 18 bis 29.

Ausführungsform 31: Grundkörper, der sich in eine Längsrichtung erstreckt, nämlich Gürtel, Armband oder Halsband, mit einem auf der Oberseite und in Längsrichtung des Grundkörpers angebrachten Dekorationsband nach einer oder mehreren der vorhergehenden Ausführungsformen 17 und 23 bis 29.

Ausführungsform 32: Verwendung eines Dekorationsbands nach einer oder mehreren der vorhergehenden Ausführungsformen 17 und 23 bis 29 als Gürtel, Armband oder Halsband.

Ausführungsform 33: Verwendung eines Dekorationsbands nach einer oder mehreren der vorhergehenden Ausführungsformen 17 und 23 bis 29 als Dekorationsband für Grundkörper, welche sich in eine Längsrichtung erstrecken, insbesondere Gürtel, Armbänder oder Halsbänder, wobei das Dekorationsband auf der Oberseite und in der jeweiligen Längsrichtung des Grundkörpers angebracht wird.

Ausführungsform 34: Zaum-Stirnband oder Dekorationsband oder Gürtel, Armband oder Halsband, oder Gegenstück, oder Grundkörper, jeweils nach einer oder mehreren der vorhergehenden Ausführungsformen, wobei der jeweilige Gegenstand ferner zumindest eines der in oben stehender Beschreibung erörterten Merkmale aufweist.

Ausführungsform 35: Zaum-Stirnband oder Dekorationsband oder Gürtel, Armband oder Halsband, oder Gegenstück, oder Grundkörper, jeweils nach einer oder mehreren der vorhergehenden Ausführungsformen, wobei der jeweilige Gegenstand die zusätzlichen Merkmale zumindest eines der in oben stehender Beschreibung dargelegten Ausführungsbeispiele aufweist.

Ausführungsform 36: Zaum-Stirnband oder Dekorationsband oder Gürtel, Armband oder Halsband, oder Gegenstück, oder Grundkörper, jeweils nach einer oder mehreren der vorhergehenden Ausführungsformen, wobei der jeweilige Gegenstand nach einem der in oben stehender Beschreibung dargelegten Ausführungsbeispiele ausgebildet ist.

Ausführungsform 37: Zaum-Stirnband oder Dekorationsband oder Gürtel, Armband oder Halsband, oder Gegenstück, oder Grundkörper, jeweils nach einer oder mehreren der vorhergehenden Ausführungsformen, wobei der jeweilige Gegenstand die zusätzlichen Merkmale zumindest einer weiteren vorhergehenden Ausführungsform aufweist.

### Bezugszeichenliste

- 10: Bandförmiges Element
- 12, 112: Ende (bandförmiges Element)
- 14, 114: Magnetisches Element
- 16: Dekorationselement

- 20: Zaum-Stirnband
- 22, 122, 222, 322: Gegenstück
- 24, 124: Hülse
- 26, 126: Schlaufe
- 28, 128: Doppellagiger Bereich
- 32: Zweites magnetisches Element
- 34: Seitenwand
- 36: Kanal

- 40: Dekorationsband

- 50: Grundkörper

## Patentansprüche

1. Grundkörper (50), der sich in eine Längsrichtung erstreckt, nämlich Gürtel, Armband oder Halsband, mit einem auf der Oberseite und in Längsrichtung des Grundkörpers (50) angebrachten Dekorationsband (40)
mit einem bandförmigen Element (10), wobei an beiden Enden (12, 112) des bandförmigen Elements (10) jeweils ein magnetisches Element (14, 114) zur lösbaren Verbindung des jeweiligen Endes (12, 112) an einem zweiten magnetischen Element (32) angeordnet ist, und
mit zwei Gegenstücken (22, 122, 222, 322), welche jeweils ein zweites magnetisches Element (32) aufweisen, wobei jeweils ein Ende (12, 112) des bandförmigen Elements (10) lösbar an oder in einem Gegenstück (22, 122, 222, 322), nämlich an dem zweiten magnetischen Element (32) des Gegenstücks (22, 122, 222, 322), festlegbar bzw. festgelegt ist.

2. Grundkörper (50) nach Anspruch 1, **dadurch gekennzeichnet, dass** das Gegenstück (22, 122, 222, 322) als Hülse (24, 124) ausgeführt ist, in welcher das zweite magnetische Element (32) angeordnet ist, und in die ein Ende (12, 112) des bandförmigen Elements (10) zur lösbaren Festlegung des Endes (12, 112) an dem Gegenstück (22, 122, 222, 322), nämlich an dessen zweitem magnetischen Element (32), einführbar bzw. eingeführt ist.

3. Grundkörper (50) nach Anspruch 1 oder 2, **dadurch gekennzeichnet, dass** das Gegenstück (22, 122, 222, 322) aus Leder oder aus flexiblem Kunststoff, und/oder aus einem Materialstreifen, gefertigt ist.

4. Grundkörper (50) nach Anspruch 3, **dadurch gekennzeichnet, dass** der Materialstreifen zur Bildung einer Hülse (24, 124) einen doppellagigen Bereich (28, 128) aufweist.

5. Grundkörper (50) nach Anspruch 4, **dadurch gekennzeichnet, dass** das zweite magnetische Element (32) innerhalb des doppellagigen Bereichs (28, 128) aufgenommen, insbesondere verklebt oder vernäht, ist.

6. Grundkörper (50) nach einem der Ansprüche 1 bis 5, **dadurch gekennzeichnet, dass** das bandförmige Element (10) aus Leder oder aus flexiblem Kunststoff gebildet ist.

7. Grundkörper (50) nach einem der Ansprüche 1 bis 6, **dadurch gekennzeichnet, dass** das bandförmige Element (10) auf seiner Oberseite Dekorationselemente (16) aufweist.

8. Grundkörper (50) nach einem der Ansprüche 1 bis 7, **dadurch gekennzeichnet, dass** das magnetische Element (14, 114) teilweise oder vollständig von dem Material des bandförmigen Elements (10) umschlossen ist.
